# EUROPEAN PATENT APPLICATION

(11) **EP 4 767 889 A1**
(43) Date of publication of application: **01.07.2026**
(21) Application number: 25167152.5
(22) Date of filing: 28.03.2025
(51) Int. Cl.: A47J 47/08, A47J 47/14, A45C 11/20, B65D 21/02

(54) **FOOD SERVING SYSTEM**

(30) Priority: 26.12.2024 US 202419001805; 12.03.2025 US 202519077658
(71) Applicant: Lifetime Brands, Inc., Garden City, NY 11530 (US)
(72) Inventor: Seo, YoungJin, New York (US); Krent, Adam, New York (US)
(74) Representative: Forresters IP LLP

(57) **Abstract**

A food serving system is provided and includes a board and a cover having two operation modes of use and a dual stage locking handle configured to lock the board in both a first position when covered by the cover (first operation mode), and a second position when the board is nested within the cover turned upside down (second operation mode).

## Description

### CROSS REFERENCE TO RELATED APPLICATIONS

This application is a Continuation-in-Part of co-pending U.S. Patent application Serial No. 19/001,805 filed on December 26, 2024, the entire contents of which is incorporated herein by reference.

### BACKGROUND

### Technical Field

The present invention relates to food preparation and serving. More particularly, it relates to food serving system including a cover having multiple functions.

### Description of the prior art

When it comes to the preparation and serving of food, it will be appreciated that the tools used for each are mutually exclusive of each other. Very often the food is prepared using cookware, and other food preparation utensils and once food prep is completed, the prepared food is moved to some separate form of serverware.

### SUMMARY OF THE INVENTION

The present invention provides a food serving system having a base board of a predetermined geometric shape having an edge around the same, the edge having at least one indentation. A cover having the same geometric shape as the based includes at least one dual stage locking handle configured to lock the board in both a first covered position when covered by the cover, and a second nested position when the base board is nested within the cover turned upside down.

In one implementation, the board includes two indentations positioned opposite each other, and the cover includes at least two dual stage locking handles, each configured to engage one of the indentations.

In another implementation, the board further includes at least one indentation causing the board to have a thickness substantially equal to the space between the transverse extension (3022) and the snapping nub (3024) such that the when the cover is positioned over the board to cover the same in the first position, the at least one handle is pivoted downward such that transverse extension and snapping nub snap over the edge of the board and lock the cover to the board in the first position.

In accordance with one aspect, the dual stage locking handle is pivotally connected to the cover at pivot connection point having an inner surface. A transverse extension extends from the inner surface, and a snapping nub spaced from the transverse extension. When in the second nested position, the edge of the board in the area of the at least one indentation fits between the transverse extension and the snapping nub thereby securing the board in the second nested position.

According to another implementation, the food serving system includes a board having a predetermined geometric shape with an edge of a predetermined thickness around the same. A cover has the same predetermined geometric shape as the board, and at least one dual stage locking handle configured to engage the edge and lock the board in both a first position when covered by the cover, and a second position when the board is nested within the cover turned upside down.

Other aspects and features of the present principles will become apparent from the following detailed description considered in conjunction with the accompanying drawings. It is to be understood, however, that the drawings are designed solely for purposes of illustration and not as a definition of the limits of the present principles, for which reference should be made to the appended claims. It should be further understood that the drawings are not necessarily drawn to scale and that, unless otherwise indicated, they are merely intended to conceptually illustrate the structures and procedures described herein.

### BRIEF DESCRIPTION OF THE DRAWINGS

In the drawings wherein like reference numerals denote similar components throughout the views:
FIG. 1 shows a perspective view of the food preparation and serving system according to an embodiment of the invention;
FIG. 2A shows an exploded perspective view of the embodiment shown in FIG. 1;
FIG. 2B shows an exploded perspective view of the food preparation and serving system according another embodiment of the invention;
FIG. 2C shows an exploded perspective view of the food preparation and serving system according a further embodiment of the invention;
FIG. 2D shows an exploded perspective view of the food preparation and serving system according yet another embodiment of the invention;
FIG. 2E shows an exploded perspective view of the food preparation and serving system according another embodiment of the invention;
FIG. 2F shows an exploded perspective view of the food preparation and serving system according another embodiment of the invention;
FIG. 2G shows an exploded perspective view of the food preparation and serving system according another embodiment of the invention;
FIG. 2H shows an exploded perspective view of the food preparation and serving system according another embodiment of the invention;
FIGS. 3A-3E show plan views of alternative bowl shapes and configurations according to other embodiments of the invention;
FIGS. 4A-4G show top views of alternative cover shapes with their corresponding combined serving trays/cutting boards according to further embodiments of the invention;
FIGS 5A-5C show plan views of alternative cover designs for the food preparation and serving system, according to alternative embodiments of the invention;
FIGS. 6A-6F show plan views of alternative combined serving trays/cutting boards according to yet further embodiments of the invention;
FIGS. 7A-7E show cross-sectional views of alternative profiles for seating the combined serving tray/cutting board into the bowl, according to alternative embodiments of the invention;
FIGS. 8A-8H show different views of alternative cover handle implementations according to alternative embodiments of the invention;
FIGS. 9A-9E show an alternative locking mechanism for locking the cover to the bowl, according to other embodiments of the invention;
FIGS. 10A-10C show a multi-tiered serving system according to another implementation;
FIG. 11A is a perspective view of the cover of the multi-tiered serving system of FIG. 10A according to one implementation;
FIG. 11B is an enlarged view of section B identified in FIG. 11A;
FIG. 12A is another alternative implementation of a food serving system according to the present invention;
FIG. 12B is a perspective view of the cover of the food serving system of FIG. 12A, according to one implementation;
FIG. 12C is a perspective view of the base serving board of the food serving system of FIG. 12A, according to one implementation;
FIG. 13 is a perspective view of the food serving system of FIG. 12A shown in a nesting arrangement according to an implementation;
FIG. 14A is a top view of the food serving system shown in FIG. 12A;
FIG. 14B is a cross-sectional view of the food serving system taken along lines I-I of FIG. 14A;
FIG. 14C is an enlarged view of the handle area identified as E1 in FIG. 14B;
FIG. 15A is a top view of the food serving system in the nesting arrangement shown in FIG. 13;
FIG. 15B is a cross-sectional view of the food serving system taken along lines II-II of FIG. 15A; and
FIG. 15C is an enlarged view of the handle area identified as E2 in FIG. 15B.

### DETAILED DESCRIPTION

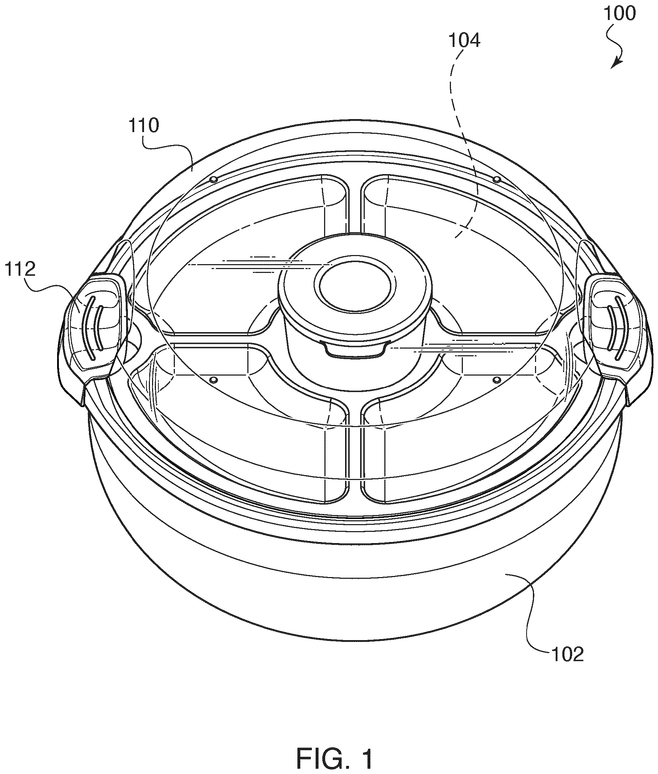

Referring to FIG. 1, there is shown the food preparation and serving system 100 according to one implementation of the present invention. The system 100 includes a bottom or base bowl 102, a combined serving board/cutting board 104 positioned in the opening of the bottom/base bowl 102 and a removable cover 110.

In the following embodiments, it is to be appreciated that the base or bowl 102 and the combined serving board/cutting board 104 can be made of any appropriate materials for food preparation and/or serving or any combinations thereof. This includes, but is not limited to wood, plastics, silicone, and/or any combinations of the same.

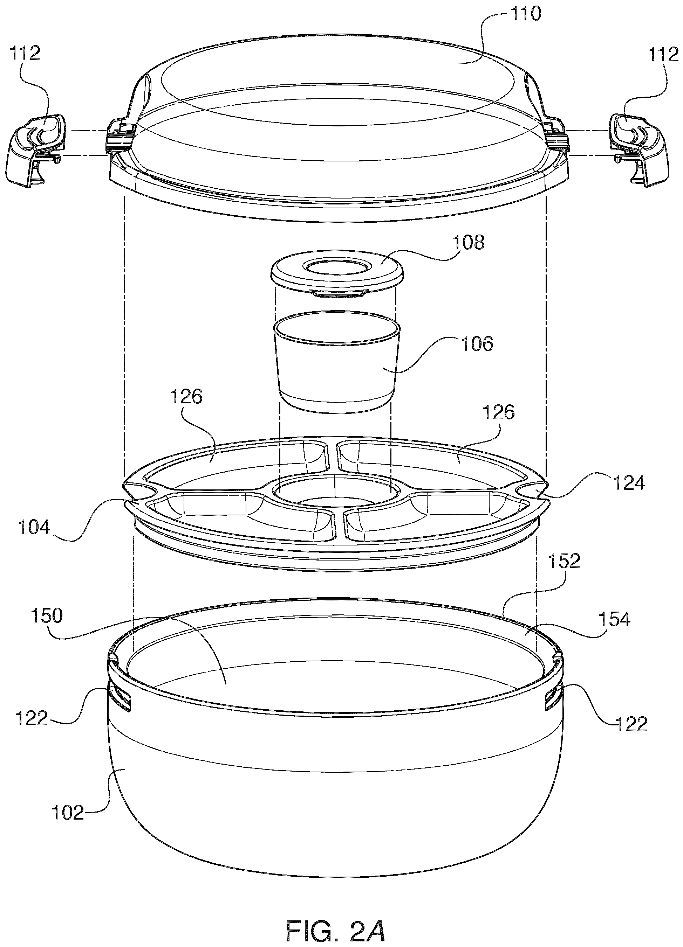

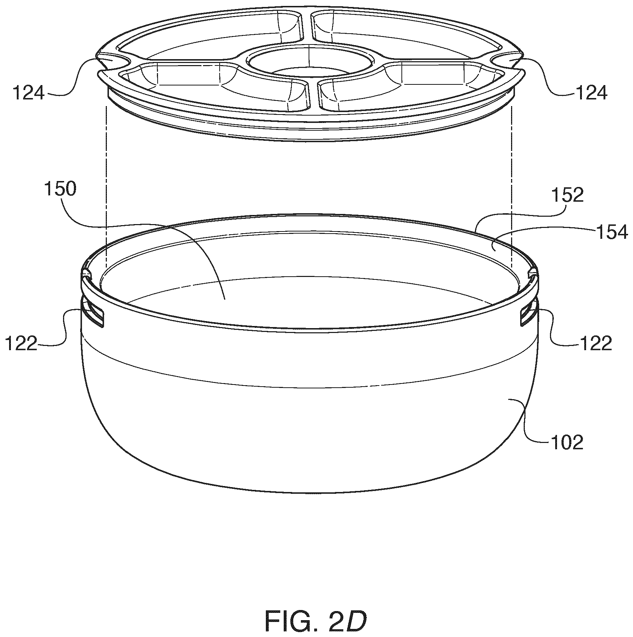

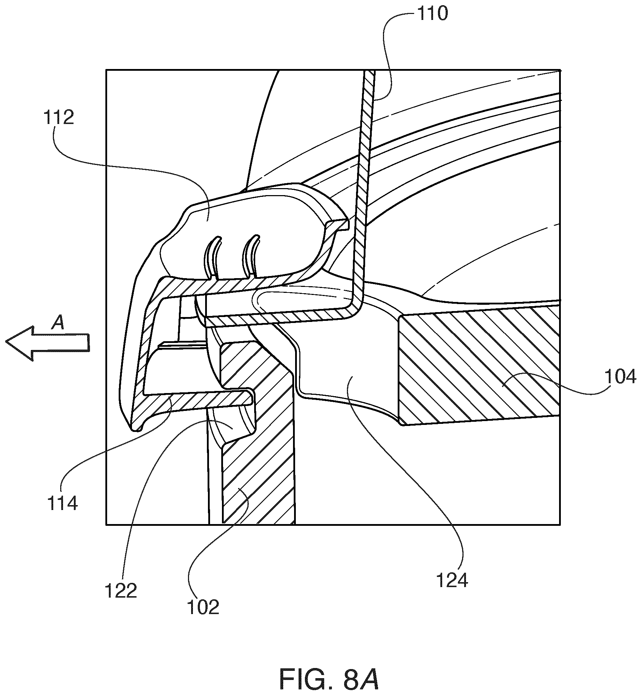

FIGS. 2A-2D shows some variations in the food preparation and serving system in accordance with alternative embodiments. FIG. 2A shows the bowl 102 with the combined serving board/cutting board 104 having a plurality of compartments or depressions that operate as compartments 126 of various sizes and shapes for the serving of food products. In this implementation, the bowl 102 has an opening 150, an upper perimeter edge 152, and an angled surface 154 immediately adjacent the upper edge. As will be described in more detail below, the board 104 nests inside the upper most portion of the bowl as defined by the angled surface 154 and corresponding angled surface on the edge of the board 104 (described in more detail below) such that the board 104 sits flush with the opening and the upper perimeter edge 152 of the bowl. At least one opening or recess 124 is provided on the edge of the board 104 that assists in the removal of the board 104 from a nested position in the bowl opening 150. In this embodiment a container 106 with a cover 108 can be positioned in the central compartment. A cover 110 is provided with locking handles 112 configured to engage the openings 122 in the upper sides or outer rim 152 of the bowl 102. The details of the locking handles 112 and alternative arrangements of the same will be discussed below in reference to FIGS. 8A-8G. In this configuration, the container 106 with cover 108 fits in the central compartment 126 and the cover 110 locks in over the same, thus securing the entire food preparation/serving system for safe movement/travel.

In another alternative configuration, the base or bowl 102 can be configured to receive one or more boards 104 such that they do not necessarily sit flush with the upper edge or rim of the bowl.

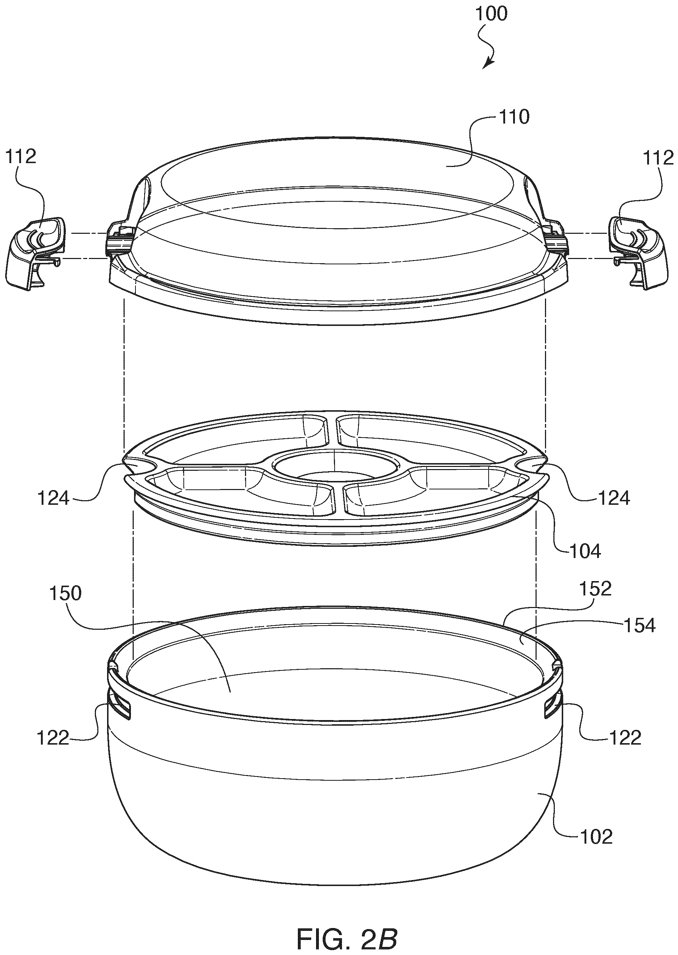

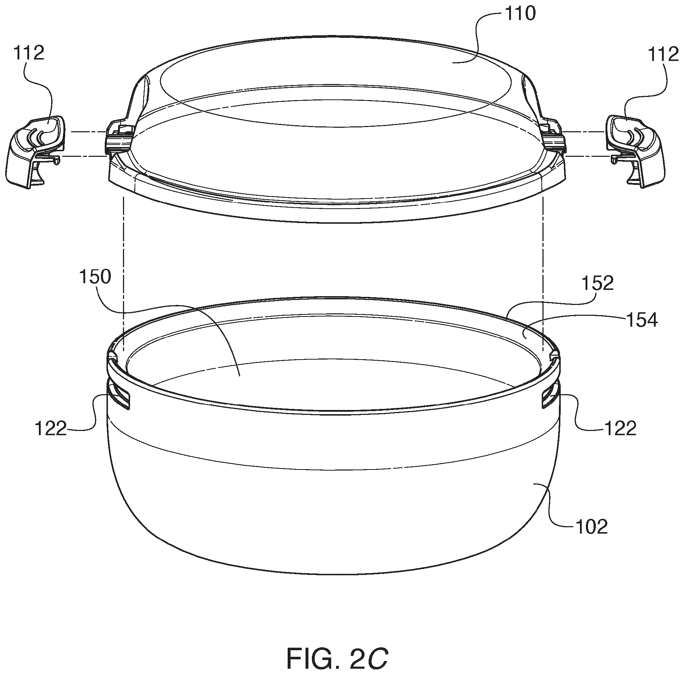

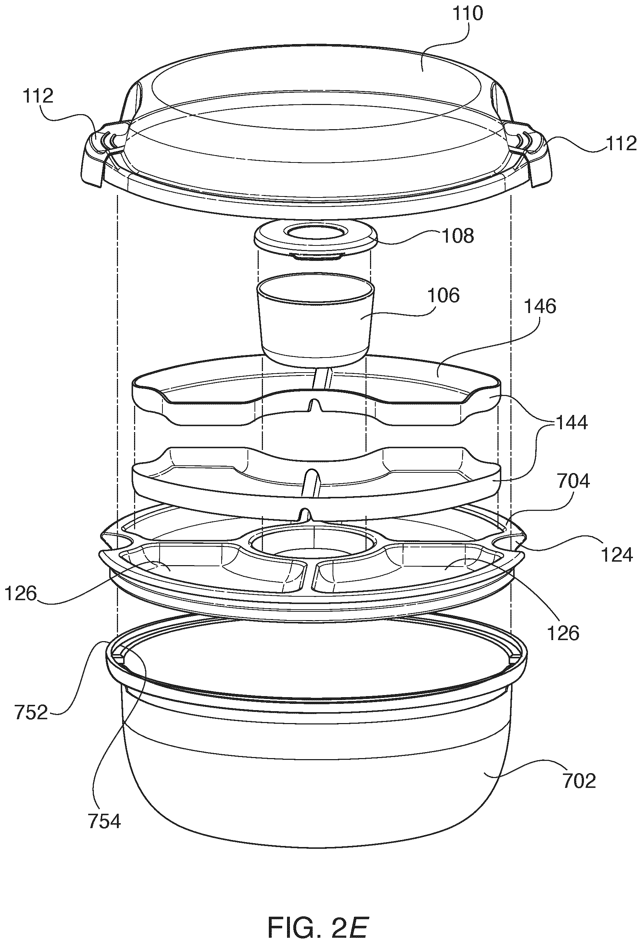

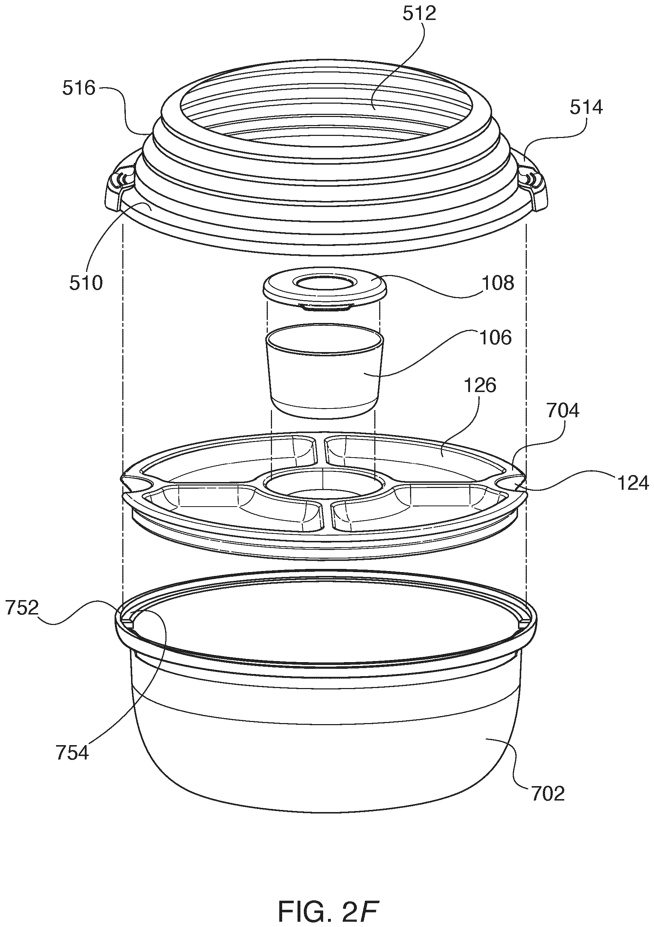

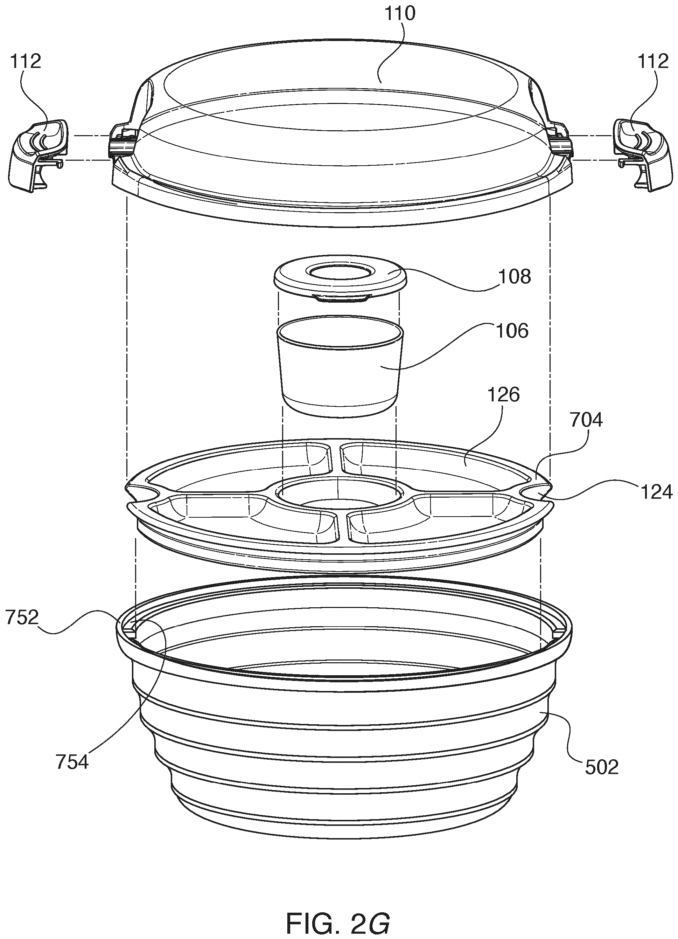

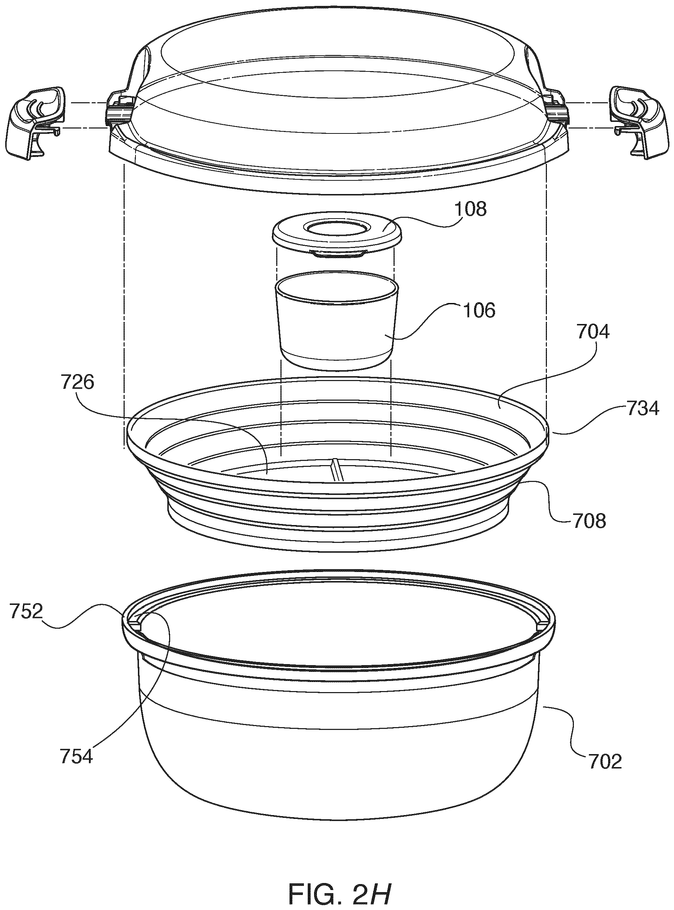

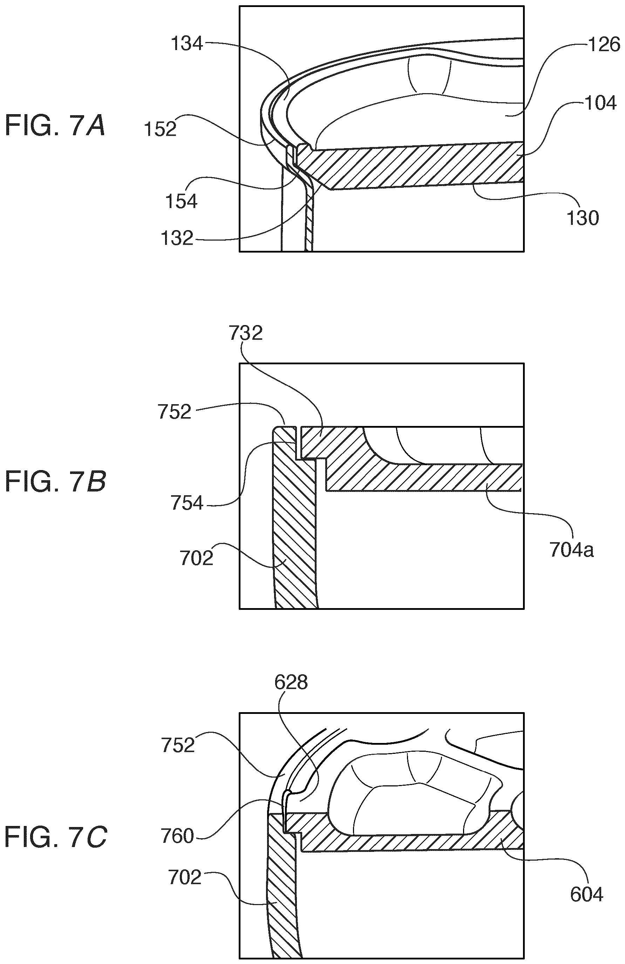

FIG. 2B shows an alternative embodiment of the system 100 without the container 106 and corresponding cover. FIG. 2C shows the system 100 without the combined serving/cutting board 104. FIG .2D shows the system 100 with just the bowl 102 and the combined serving/cutting board 104. The manner in which the combined serving/cutting board 104 rests or nests into the top of the bowl 102 will be described below with reference to FIGS. 7A-7E. FIG. 2E shows an alternative implementation of the system 100 where the other serving trays 144 are added that can fit over the combined serving/cutting board 704. FIG. 2F shows an alternative implementation of the system 100 where the cover 510 is a collapsible cover having an outer edge 514, a collapsible body 516 and a transparent top 512. FIG. 2G shows another alternative implementation of the system 100 where the bowl 502 is collapsible. FIG. 2H shows yet a further alternative implementation of the system 100 where the combined serving/cutting board 704 has a collapsible body 708, with compartments 726 positioned at the bottom thereof.

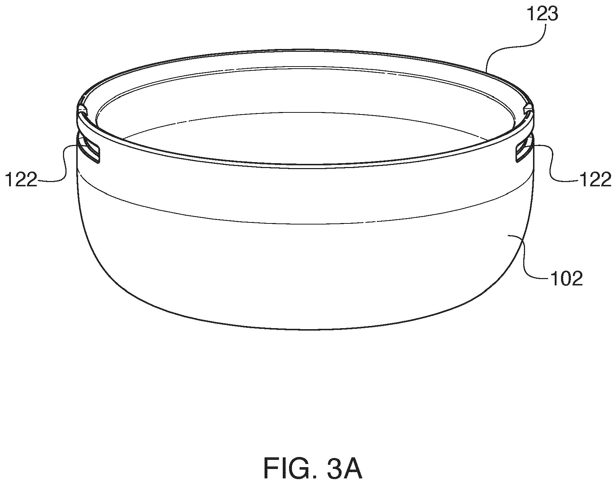

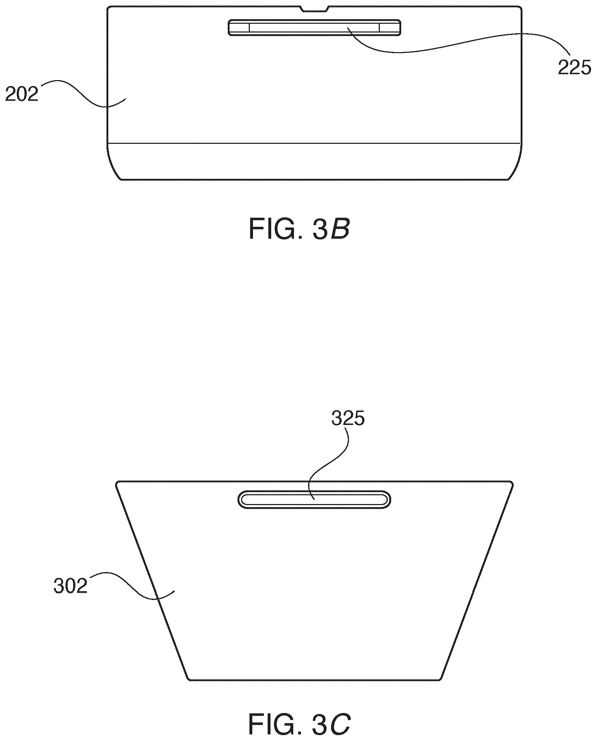

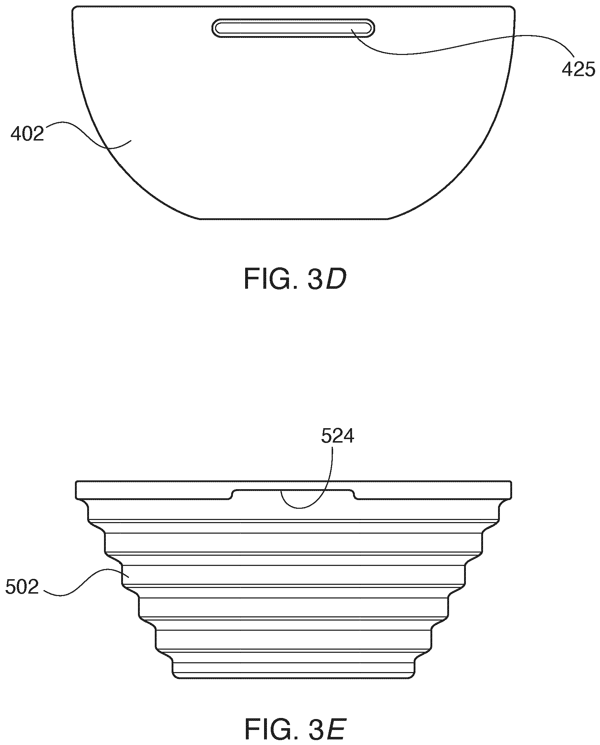

FIGS. 3A-3F show side views of various different geometric configurations of the base bowl 102 according to other contemplated implementations of the invention. FIG. 3A shows a cylindrical shape with large rounded bottom bowl 102 according to primary example of this disclosure. This embodiment shows the openings or recesses 124 in the sides for receiving and locking the handles of the cover. FIG. 3B shows cylindrically shaped bowl/base 202 with the openings or recesses 224 for receiving the locking handles of the cover. FIG. 3C shows upside down cone shape or frusto-conical shaped base/bowl 302 having the openings or recesses 324 for receiving the locking handles of the cover. FIG. 3D shows a round bowl shape for the base/bowl 402, also having the openings or recesses 424 for receiving the locking handles of the cover. FIG. 3E shows a collapsible base/bowl 502 having a notch 524 configured to receive the locking handles of the cover.

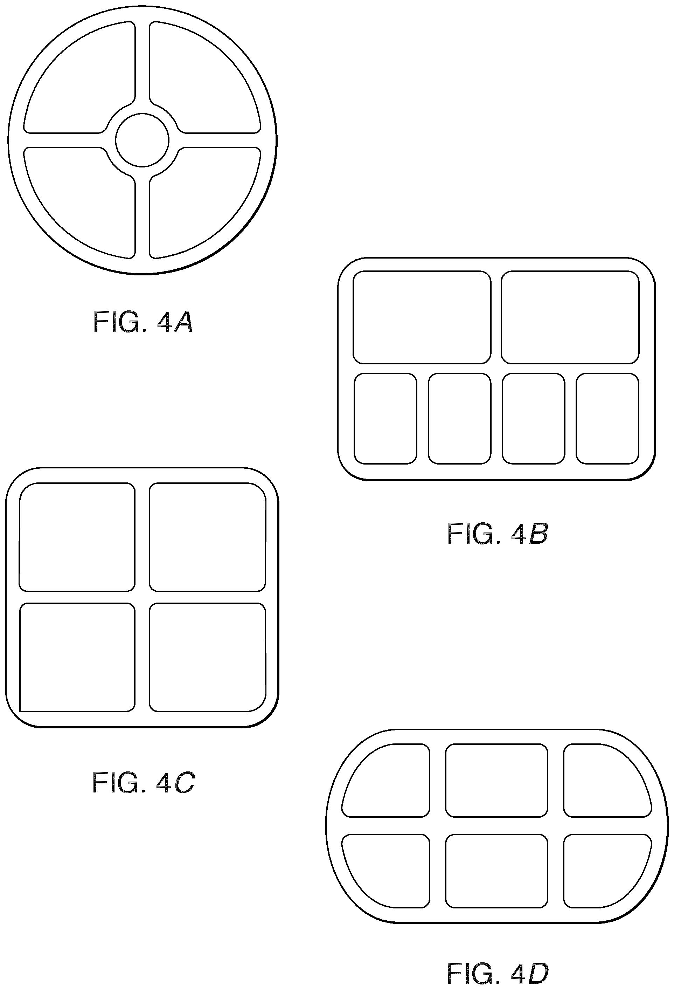

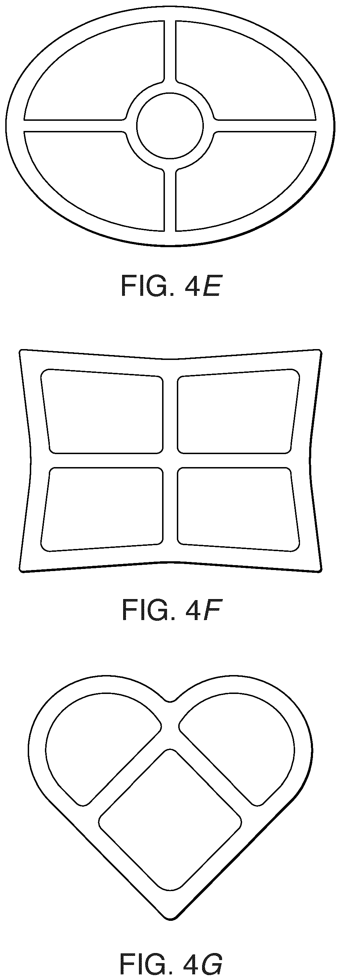

FIGS. 4A-4G show a wide array of different geometric shapes for the cover 112 and underlying combined serving/cutting boards 104 and bowls 102. As will be appreciated by the foregoing, many different geometric shapes can be implemented without departing from the scope and spirit of the present invention.

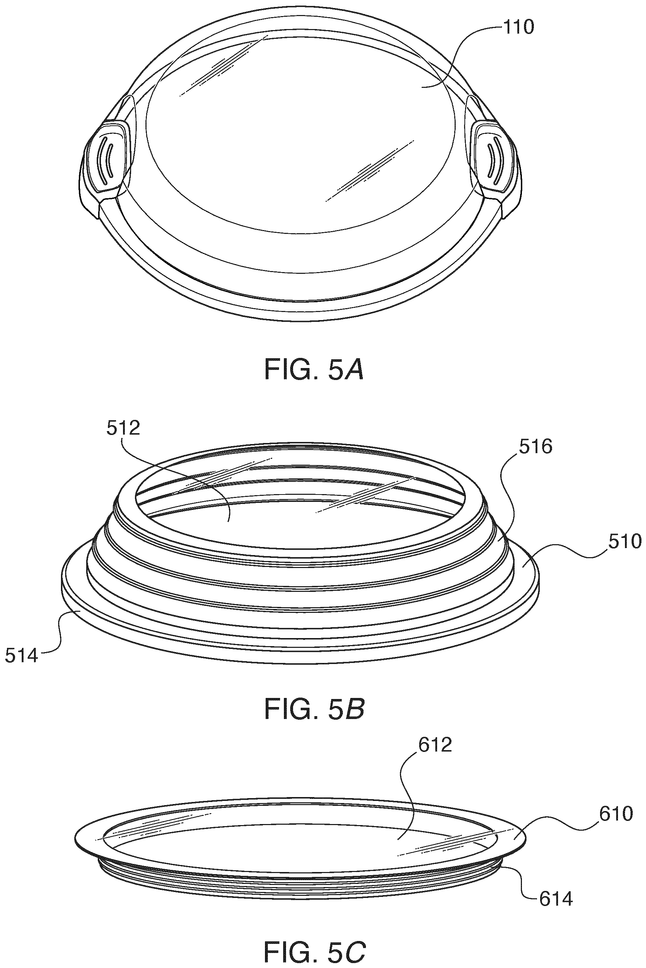

FIGS. 5A-5C show different forms that the cover can take. FIG. 5A shows a cover 110 primarily made of a transparent material. FIG. 5B shows cover 510 that is collapsible and includes a transparent top 512 that is connected to an outer or wide base portion 514 by an accordion like collapsible structure 516. Those of skill in the art will appreciate that the collapsible structure 516 can be made of, for example, silicone. FIG. 5C shows another cover 610 that has a transparent top surface 612, and a lower press fit ring 614 configured to fit into, for example, the opening of the bowl without the combined serving/cutting board.

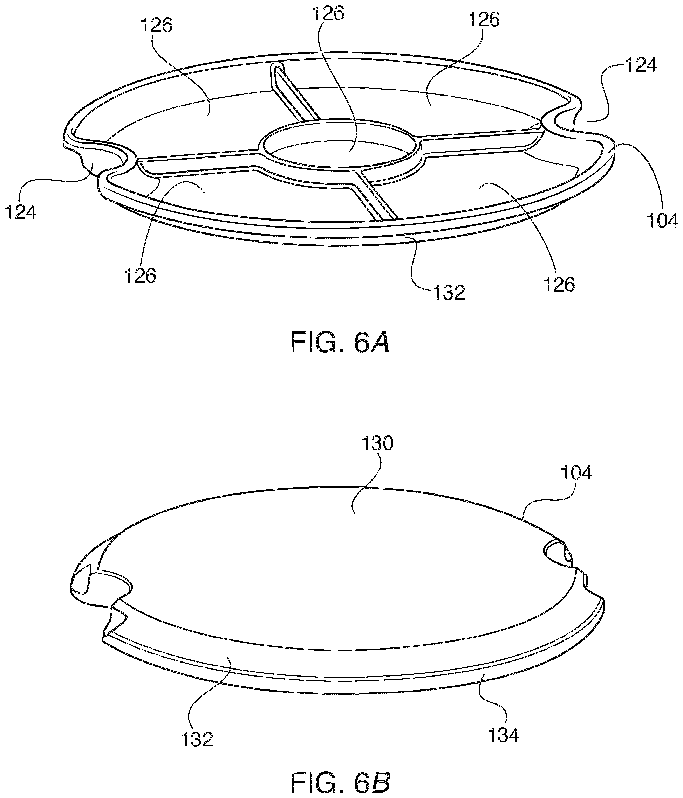

FIGS. 6A and 6B show the top and bottom view of an exemplary combined serving board and cutting board 104 according to one embodiment. On the upper side (FIG. 6A), the board 104 includes a variety of compartments or depressions 126 configured to receive food items to be served. The board 104 can include one or more openings, recesses or cutouts 124 that enable the user to easily remove the board 104 from a nested position in the top of the bowl. The underside of the board 130 (FIG. 6B) is a flat surface configured as a cutting surface for food preparation. As will be described in further detail below, the board 104 has an angled surface 132 extending from the outer rim 134 toward the cutting surface 130. This angled surface 132 us configured such that the board rests or better stated nests within the bowl along the top thereof, without falling into the bowl.

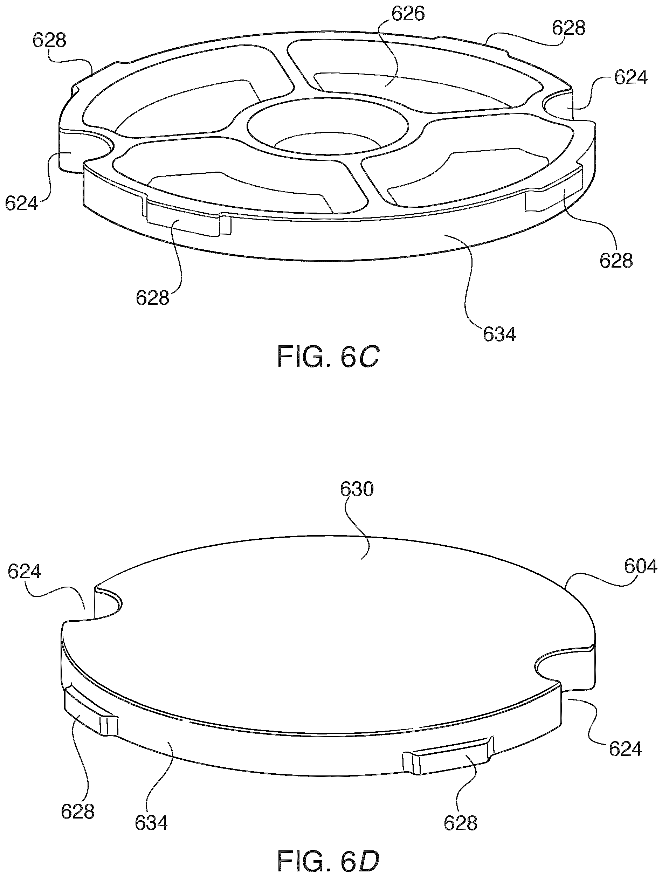

FIGS. 6C and 6D show an alternative implementation or embodiment of the combined serving/cutting board 640. One or more cutouts 624 is provided to assist the user in removing the board 640 from its nested position within the bowl. Further, in this implementation, the outer rim 624 of the board is straight and includes one or more protrusions 628 positioned around the same. These protrusions are configured to be received into corresponding notches in or within the upper edge of the bowl (See FIG. 7C) such that the board 640 sits flush with the top end of the bowl, and the compartments 626 are facing upward.

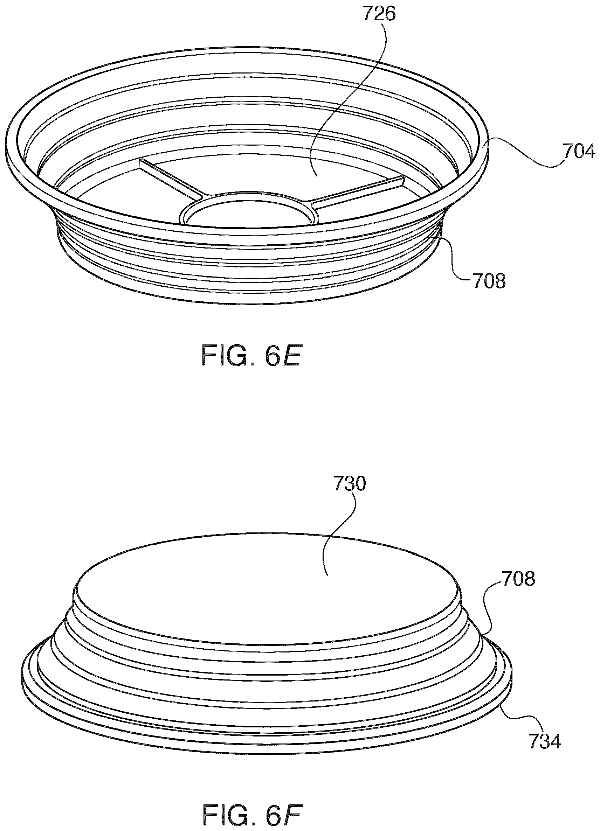

FIGS. 6E and 6F show another alternative cover 704 according to yet another embodiment. This cover 704 is collapsible having the accordion like edge 70 connecting the rim 734 to the base or on the underside cutting board 730 or on the upper side to reveal compartments 726.

FIGS. 7A-7E show various implementations of how the board nests/rests within the upper opening of the bowl without falling into the same. Referring to FIG. 7A, the board 104 has an angled surface 132 that is the same angle as the angled surface 154 immediately adjacent the upper edge 152 of the bowl. As shown, the board 104 simply drops into the opening of the bowl and fits perfectly within the bowl opening and through angled surfaces 132 and 154, the board 104 sits flush with the top edge 152 of the bowl.

FIG. 7B shows an alternative embodiment where the board 704 includes a stepped portion 732 around the entire perimeter of the board, and the bowl 702 includes a corresponding notch 754 that receives the board 704 such that it is flush with the top edge 752.

FIG. 7C shows another alternative embodiment corresponding to the board shown and described in FIGS. 6C-6D. In this implementation, the bowl 702 includes one or more notches 760 in the top edge such that the protrusions 628 on the edge of the board 604 align with and drop into the notches 760 as shown.

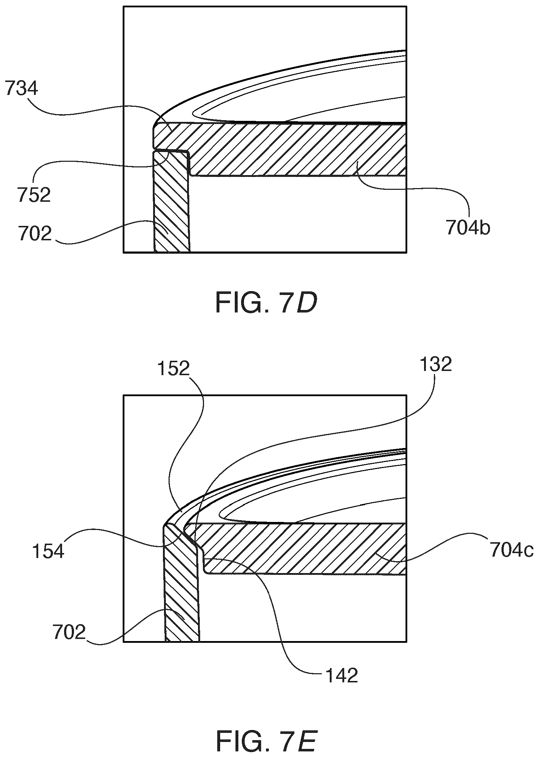

FIG. 7D shows yet another embodiment where the board 704B includes an outer edge or rim 734 that is notched such that it rests on the top edge 752 of the bowl 702.

FIG. 7E shows a further embodiment where the angled edge 132 of the board is smaller than that shown in FIG. 7A, and a portion of the board 142 on the cutting board side is further recessed into the bowl between the side walls of the same.

FIGS. 8A-8H show various embodiments of mechanisms for locking the cover 110 to the bowl 102 with the board 104 positioned in the top of the bowl.

FIG. 8A shows one implementation of a slide in lock where the handle 112 has a lower portion 114 that is configured to engage the opening or recess 122 in the exterior side of the bowl wall when pushed inward into the same. To release, the handle 112 slides outward in the direction of arrow A to release the lower portion 114 from the opening or recess 122.

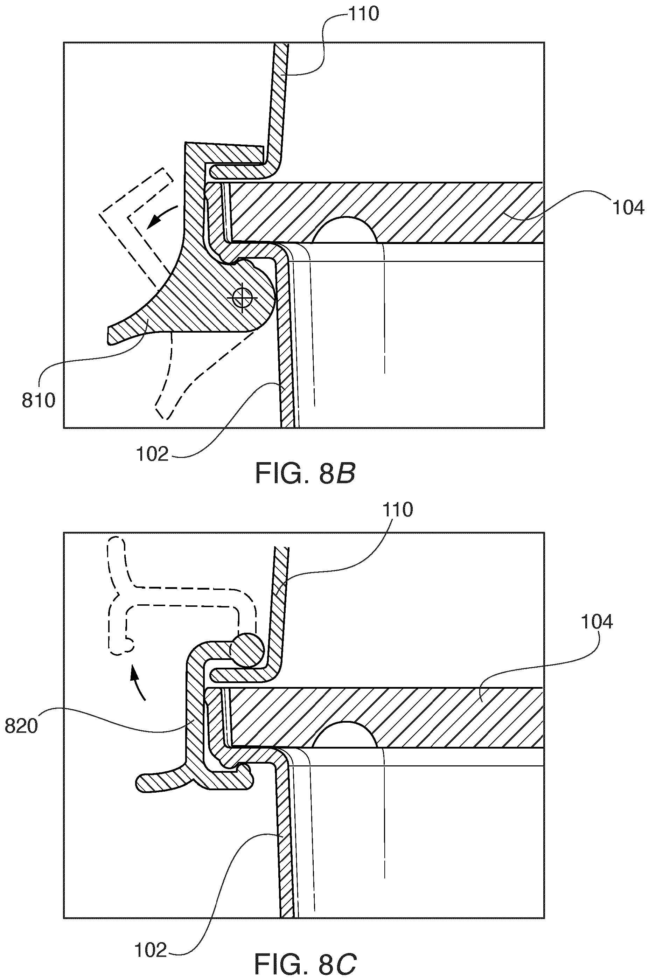

FIG. 8B shows a latch style clip 810 that is pivotally attached to the bowl 102 and pivots upward to engage the lower edge of the cover 110 and thereby secure the cover to the bowl.

FIG. 8C shows a clip on style mechanism where the clip 820 could be attached to the bowl 102 and cover 110 as shown, but not pivotally attached to either in any permanent or semi-permanent manner.

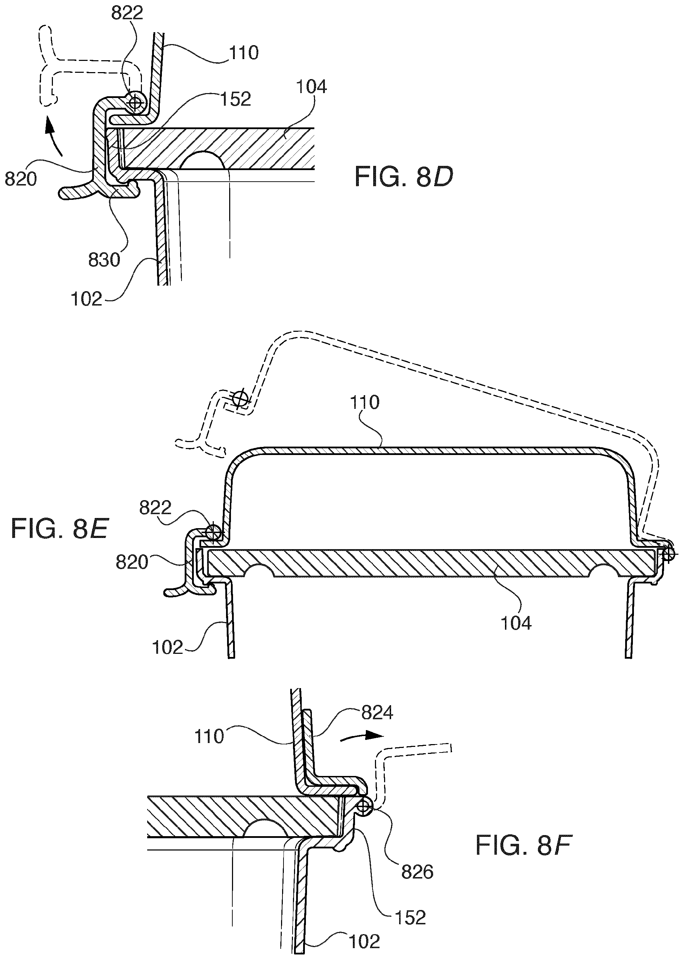

FIGS. 8D and 8E show a pivotable clip style mechanism where the clip 820 is pivotally attached to the cover 110 at a point 822 on the same. In this manner, a lower leg or portion 830 "clicks" around and under the bowl rim 152 and snaps using detents, depressions and protrusions, or any other known manner to lock the clip 820 to the bowl rim.

FIG 8F shows another hinge style clip 824 that is pivotally connected 826 to the rim 152 of the bowl. This hinge style clip does not have to lock and can simply be used as a carry point where a user's hand would hold the clip in the position shown over the cover 110 and board 104. A simple pivoting movement in the direction of the arrow would release the cover and board.

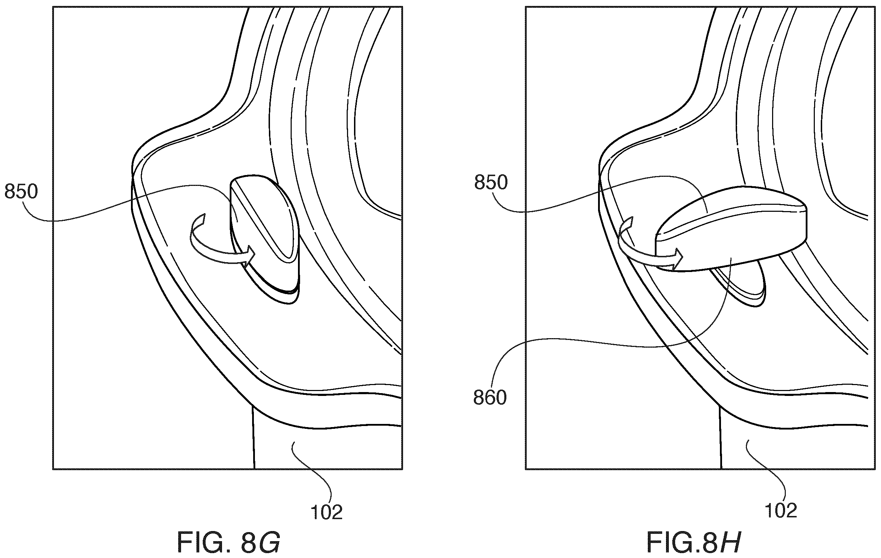

FIGS. 8G and 8H show a knob lock style mechanism for securing the lid to the bowl. In one configuration, the knob 850 is permanently affixed to the bowl, and the cover 110 has an opening 860 in the same to receive the knob 850. When the cover is positioned over the knob as shown, a 90 degree rotation of the knob operates to lock the lid to the bowl as shown in FIG. 8H. It will be appreciated that although described with the knob disposed on the bowl, other implementation where the knob and corresponding locking mechanism is attached to the cover, and the bowl has a receiving hole that receives a locking pawl or the like that when rotated with the knob, operates to lock the lid to the bowl.

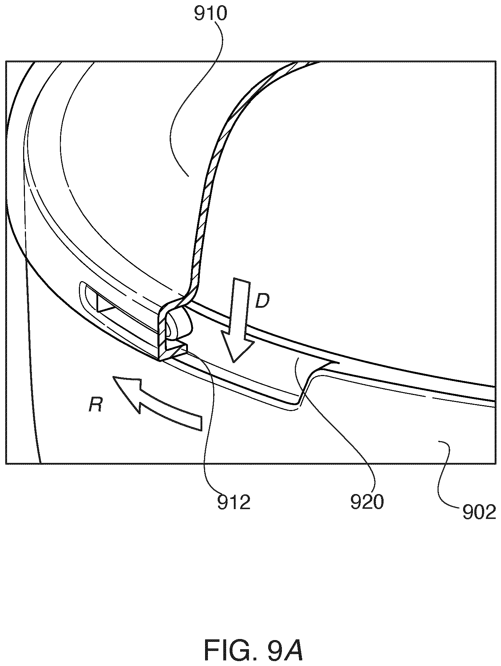

FIGS. 9A - 9E shown several other contemplated embodiments for locking the cover to the bowl, in accordance with the present invention.

FIG. 9A shows an embodiment where the bowl 902 has a slot 920 and the cover 910 has a portion 912 configured to fit into an L shaped slot 920 (or in this case a reversed L-shape) and be "dropped" down into the same as indicated by arrow D, and then the cover 910 is slightly rotated in the direction R such that the portion 912 secures into the slot 920. Simply rotating in the opposite direction and lifting action removes the cover from the locked position on the bowl.

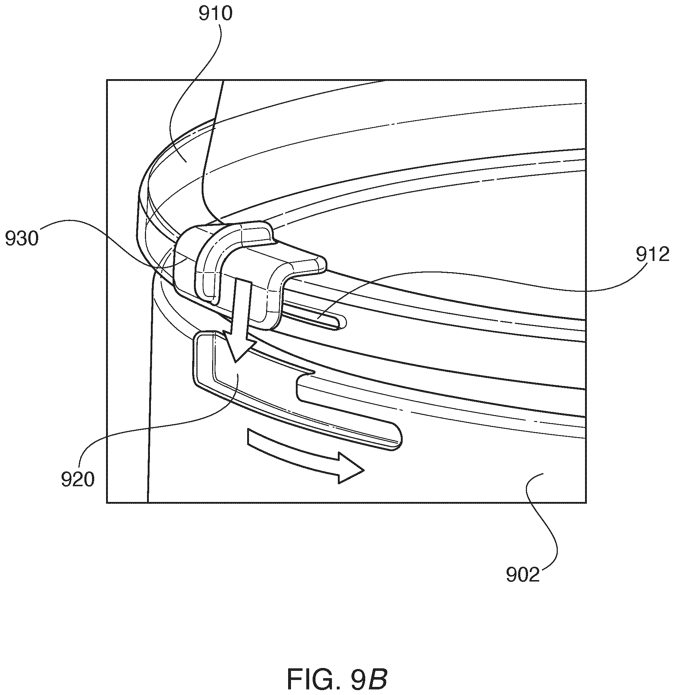

FIG. 9B shows another embodiment of a slide and lock mechanism to lock the cover 910 to the bowl 902. A sliding knob 930 is positioned within a slot 912 in the edge of the cover such that the cover is dropped downward into the L-shaped slot 920, once positioned in the slot, the knob 930 is slid horizontally to lock the cover onto the bowl.

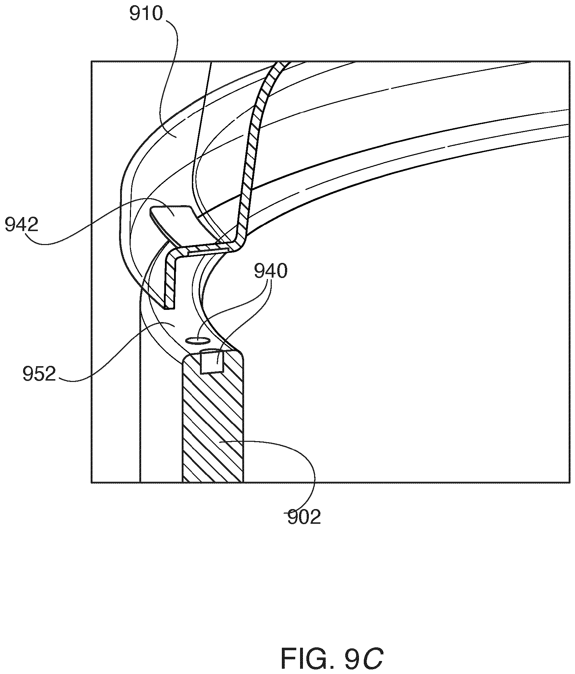

FIG. 9C shows another embodiment for securing the cover 910 to the bowl 902 using magnets. One or more magnets 940 can be disposed in the upper edge 952 of the bowl 902, and one or more magnets (of opposite pole) are positioned on the edge of the cover 910. Simple placement of the cover over the bowl will cause the magnets to engage and secure the cover to the bowl.

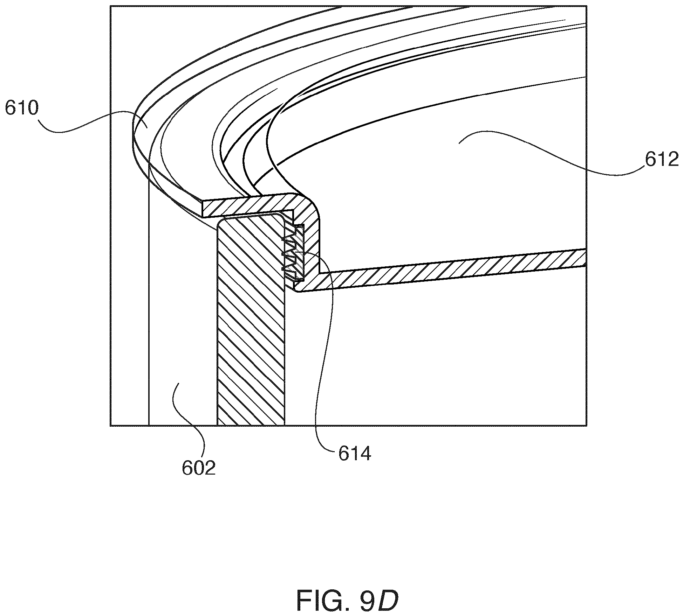

FIG. 9D shows another embodiment for securing the cover 610 to the bowl 602 using a gasket 614. As shown in the cover of FIG. 5C, a gasket 614 is positioned around the cover, and the cover is sized such that the gasket 614 frictionally engages the inside surface of the bowl opening as shown. Removal of the cover 610 requires a little user force to break the frictional engagement between the gasket 614 and the inside surface of the bowl.

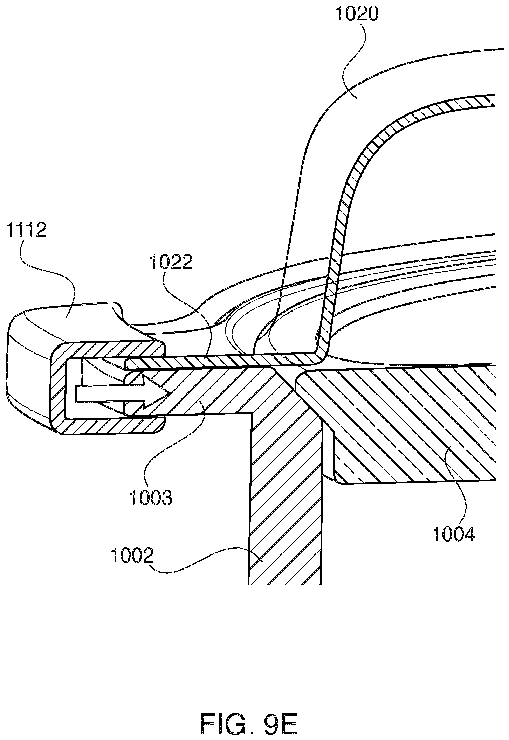

FIG. 9E shows yet another embodiment for securing the cover 1020 to the bowl 1002. As shown, the bowl 1002 has a lip 1004 and the cover has an extended base portion 1022 that are sandwiched together as shown. Once positioned together, a sliding handle 1112 is moved into position securing the sandwiched parts 1004 and 1022, thereby locking the cover 1020 to the bowl 1002.

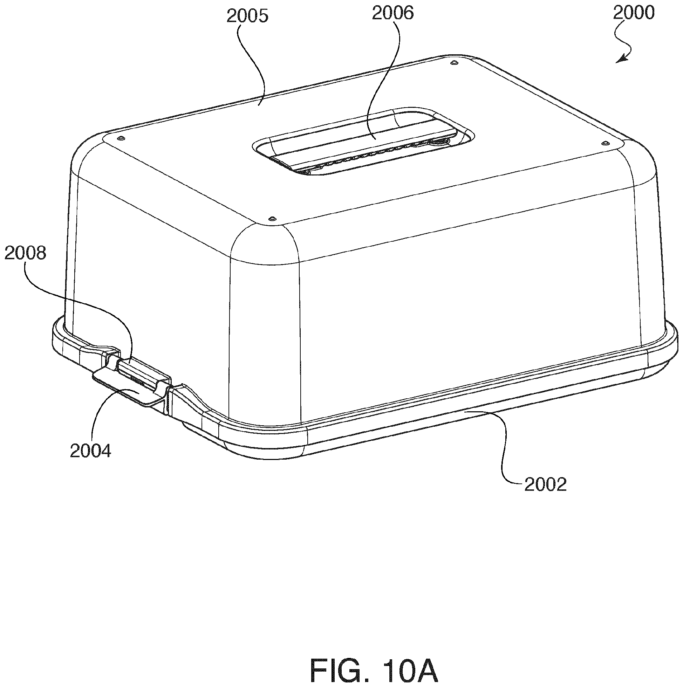

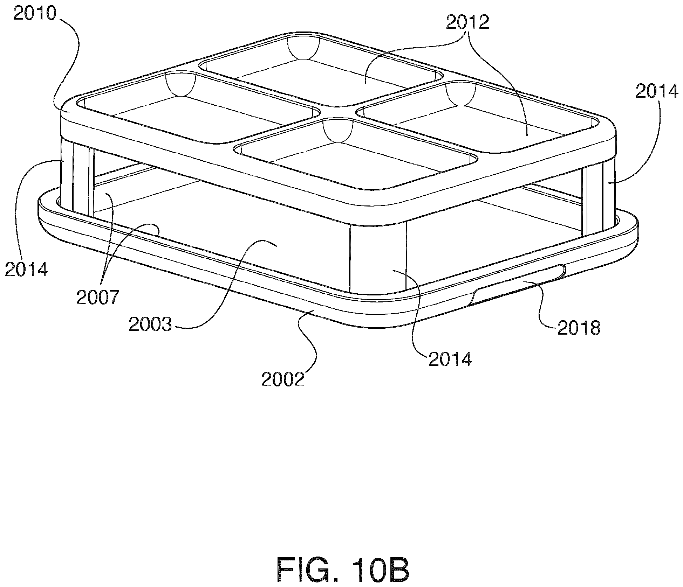

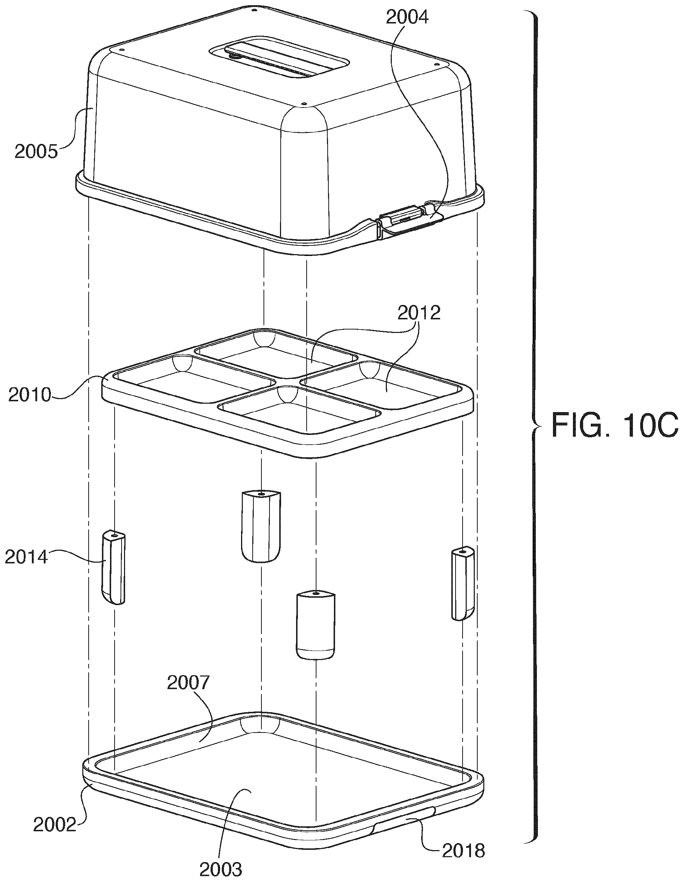

FIGS. 10A shows a multi-tier serving system 2000 according to one implementation of the invention. Th system 2000 includes a base 2002 and a cover 2005 having a top carrying handle 2006 and a latch mount 2008 positioned on both sides thereof. Referring to FIGS. 10B and 10C, the base 2002 can be a tray 2003 that is configured such that a second tier tray 2010 having legs 2014 extending downward therefrom can be positioned within the confines of the bottom tray or tier 2003. As shown, the legs 2014 are confined within the outer rim or lip 2007 and the upper surface of the second tier 2010 can include one or more depressions 2012 for receiving food items to be served. Handles 2004 are positioned on the cover 2005 and are configured to engage the base 2002 in an indented area 2018 and thereby enable the releasable locking of the cover to the board.

According to one implementation, the base 2002 and the second tier tray 2010 can be made of any suitable material, such as, for example, wood, plastics or any combinations thereof. Additionally, the cover 2005 can also be made of various types of plastics, or polyurethanes, and can be transparent, translucent, opaque and can be made in different colors is desired. It is to be further appreciated that the base 2002, second tier tray 2010 and cover 2005 can have many different geometric shapes, and the rectangular shape shown herein is for exemplary purposes only.

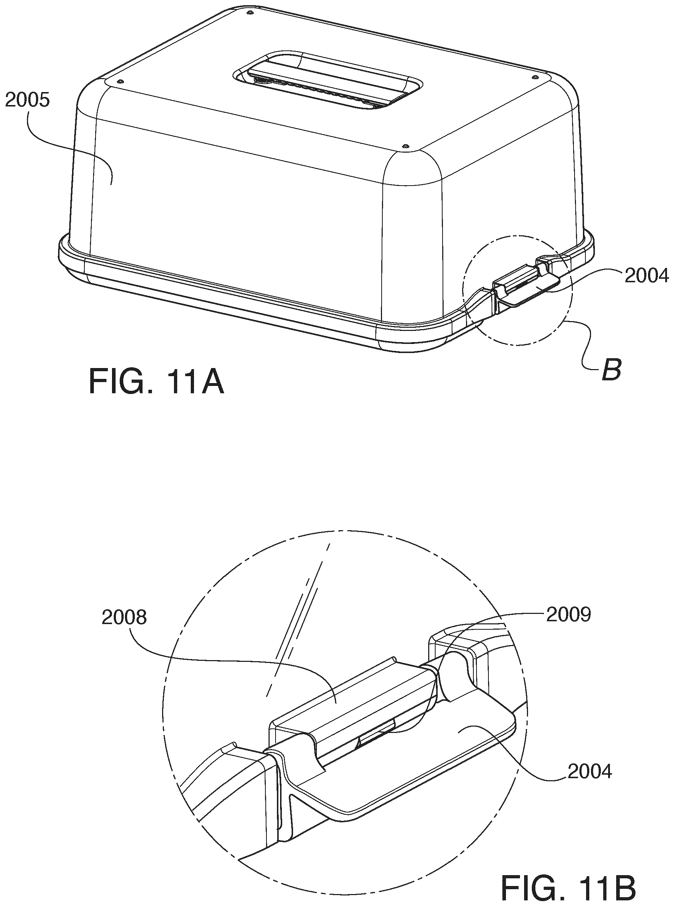

Referring to FIGS. 11A and 11B, there is shown cover 2005 with the latch mount 2008 and handles 2004 shown in an enlarged view. As shown, latch mount 2008 can include rods (not shown) that are positioned and configured to attach handle 2004 to the cover with a pivoting movement (See FIGS. 10B and 10C). Latch mounts 2008 further include a small protrusion 2009 that the handle "snaps" over in each direction to secure the handle in both the locked and open positions. It will be appreciated that when cover 2005 is positioned over the base 2002, the handles 2004 are pivoted downward over the protrusion 2009 to engage the indentation 2018, thereby securing the cover 2005 to the base board 2002. In this manner the handles 2004 can be used to carry both the base 2002 and the intermediary tier 2010 in a secure locked position with the cover 2005.

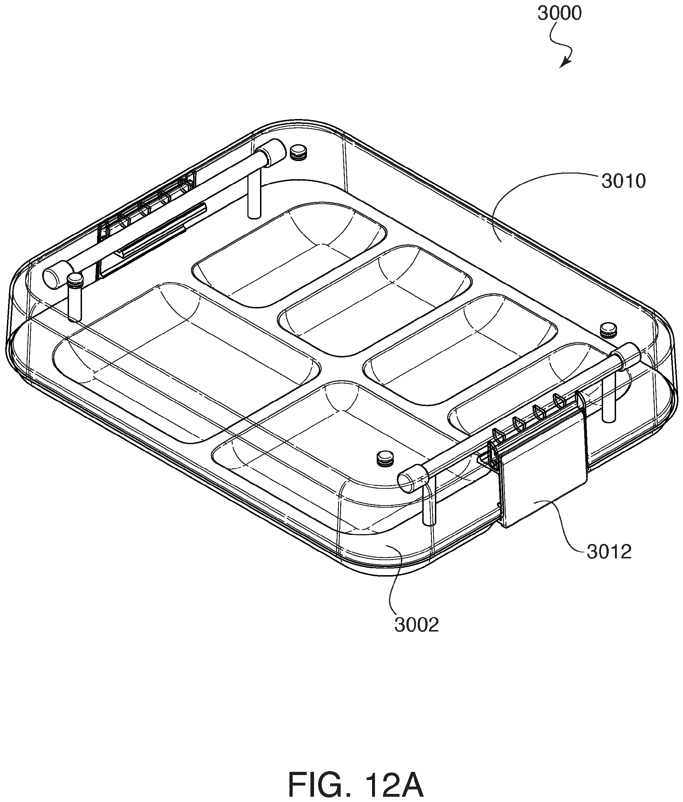

FIG. 12A shows a food serving system 3000 that includes several novel aspects according to the present invention. Among these novel aspects are a nesting feature, and a dual stage locking system.

The serving system 3000 includes a base board 3002, a cover 3010, and a dual stage latching system integrated into the handles 3012 of the cover 3010. In one implementation, cover 3010 is a transparent material (e.g., plastics, polyurethanes or glass) so that board 3002 is visible through the same. In other implementations, the cover 3010 does not have to be transparent and can be translucent or opaque and can be formed in any desired color. The base board 3002 can also be made of wood, plastic or any combinations thereof. It is to be further appreciated that the geometric shape of the base board 3002 and the cover 3010 can be many different shapes without departing from the scope and spirit of the present invention. Examples of such geometric shapes include, but are not limited to, square, rectangle (example shown), circle, triangle, hexagon, etc.

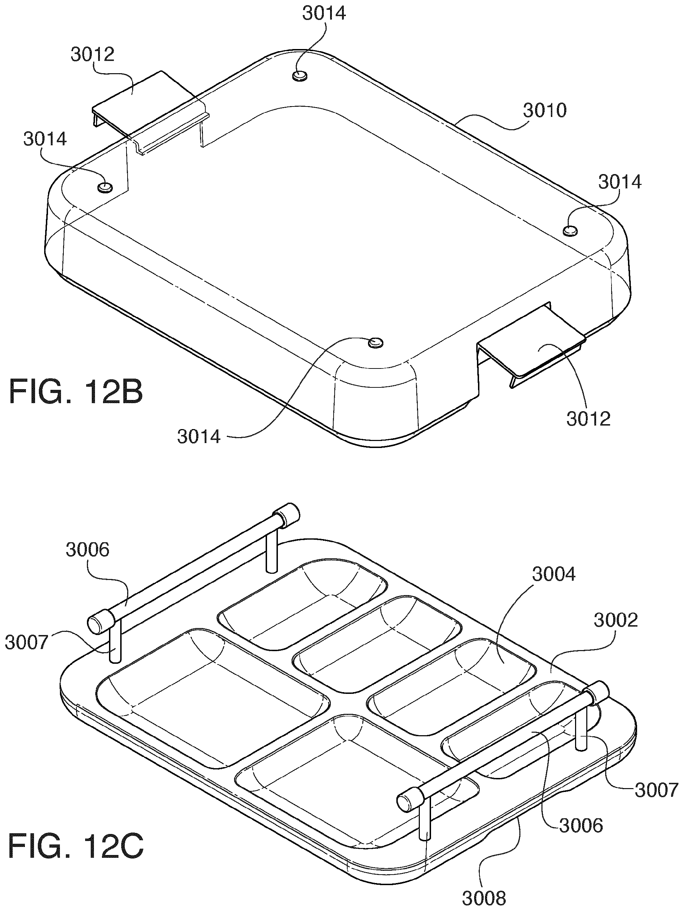

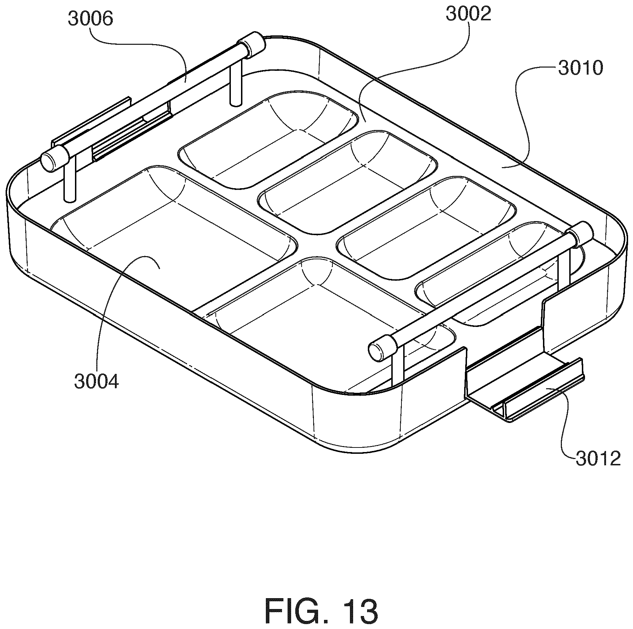

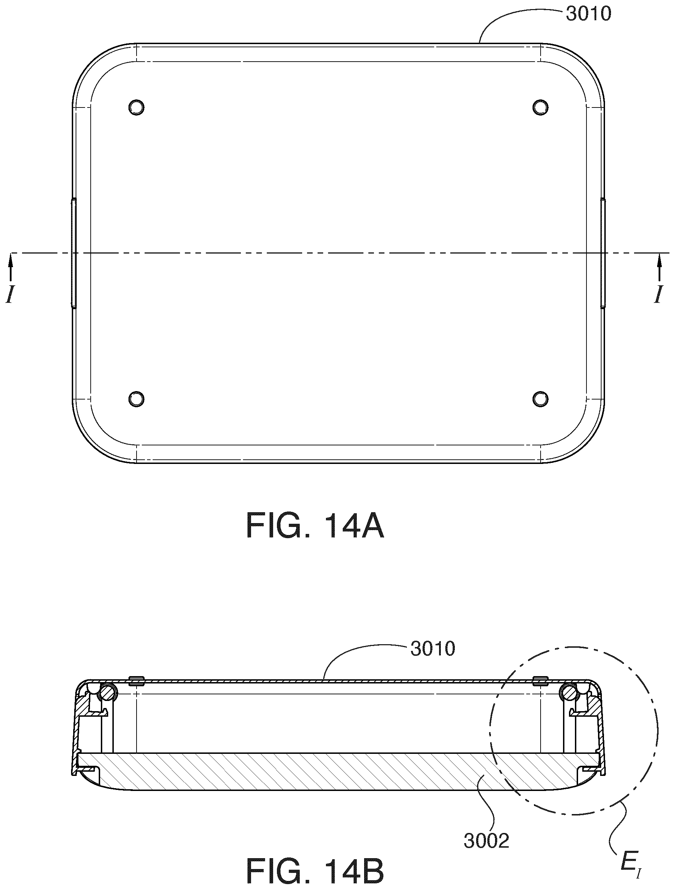

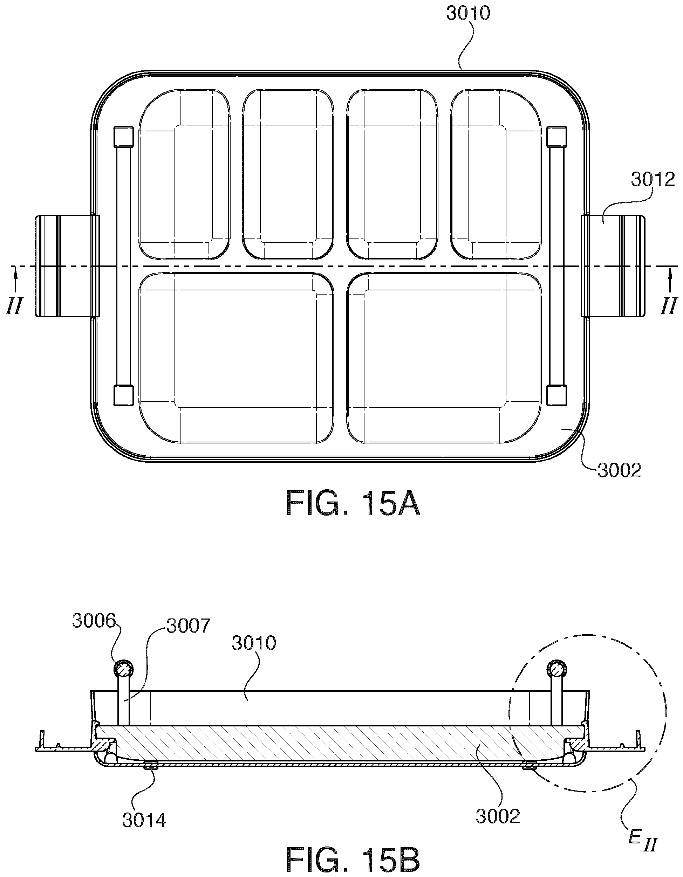

FIG. 12B shows the cover 3010 according to one implementation, having handles 3012 which, as mentioned above, are part of the dual stage latching operation (discussed in further detail below with reference to FIGS. 14A-C and 15A-C). In one implementation, a plurality of rubber or plastic bumper pads or feet 3014 are provided on the outer upper surface of the cover 3010 as shown. As will be explained in more detail below with reference to FIG. 13, the feet 3014 are designed to enable the cover 3010 to be flipped over such that it rests on the feet 3014 and then receive the base board 3002.

FIG. 12C shows the base board 3002 having one or more compartments 3004 for receiving food items for display and serving. In this exemplary implementation, the board 3002 includes handles 3006 offset from the board surface by legs or 3007, and a cutout or indentation 3008 on opposing sides with the handles 3006.

FIG. 13 shows the base board 3002 nested within the upside down cover 3010 according to one preferred implementation of the invention.

FIGS. 14A-14C show the system 3000 in the closed position with the cover 3010 positioned over the base board 3002 according to the invention.

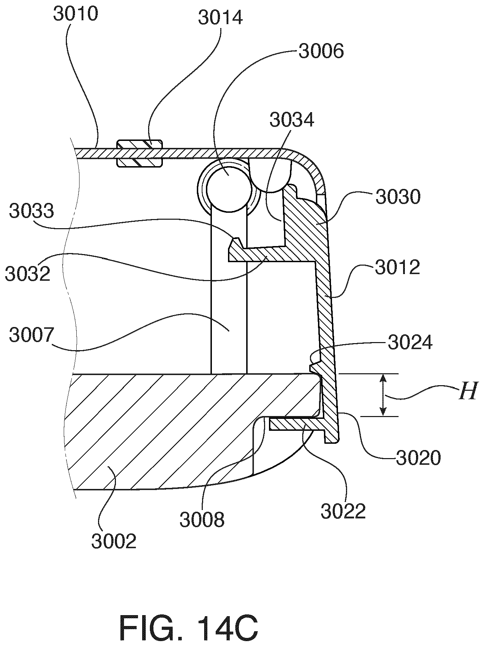

Referring to FIG. 14C, which is an enlarged portion E_{I} of FIG. 14B, there is shown a cross-sectional view of the dual stage latching system in a first locking position or a first locking stage of the dual stage locking system. As can be seen in this view, board 3002 includes cutout or indentation 3008 that reduces the thickness of the board to a predetermined height H. According to other contemplated implementations, the indentation or cutout 3008 can be replaced with an opening or hole in the edge of the board 3002 configured to receive locking handle. In other implementations, the overall thickness of the board around the edge can be the appropriate thickness for the dual stage locking handles of the present embodiments.

The handle 3012 is pivotally connected at a point 3030 to the cover and includes a lower end 3020 having transverse extension 3022 positioned near the lower end. A snapping nub or extension 3024 is spaced away from the transverse extension 3022 such that this space is substantially the same as the height H (or thickness) of the edge of the board in this handle area. When the cover 3010 is placed over the board 3002, the handles 3012 are pivoted downward such that the edge of the board indentation 3008 with the height/thickness H fits snugly or "snaps" into the space between transverse extension 3022 and snapping nub or extension 3024. In this manner, cover 3010 is now securely locked to board 3002. In one implementation, it is to be appreciated that cover 3010 can include a handle (not shown) so as to make it easier for the user to carry the combined cover 3010 and board 3002 when locked as shown in FIG. 14C.

Referring to FIGS. 15A and 15B, there is shown the board 3002 nested within the inverted cover 3010 according to a preferred implementation of the invention.

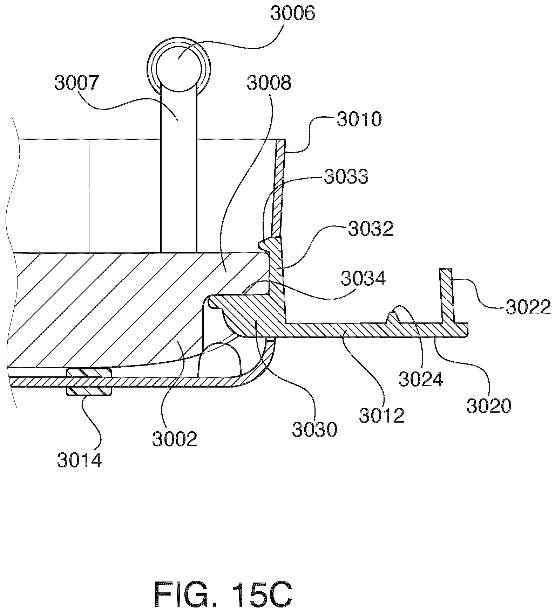

Referring to FIG. 15C, which is an enlarged portion E_{II} of FIG. 15B, there is shown a cross-sectional view of the dual stage latching system in the second locking nested position, which is the second locking stage of the dual locking system of the present invention. In this second stage, the board 3002 is locked into the nested position within the cover 3010 (turned upside down) by the handle 3012 operating in conjunction with the board cutout or indentation 3008. As shown, at the pivot point 3030, the handle 3012 includes an inner surface 3034, a short extension 3032 transverse to the inner surface 3034, and a spaced snapping nub 3033 at the end of the extension 3032. When the board 3002 is placed or nested into the upside down cover 3010, the edge of the board indentation 3008 with the height H fits snugly or "snaps" into the space between inner surface 3034 and the snaping nub 3033 as shown. In this manner, board 3002 is locked or secured into a nested position within the upside down cover 3010. The handles 3012 can also be used to carry the system 3000 in either operating position. As shown, the feet 3014 function to prevent the cover 3010 from being scratched or otherwise contacting the surface on which is placed.

It will be appreciated from the above that the dual stage locking system of the handles 3012 enables a user to transport the board 3002 covered with ease (e.g., with food already prepared for serving on the same) and upon arriving at their destination, the cover 3010 turned upside down can be used to receive the board 3002, while the board is secured therein by the dual stage locking feature of the handles.

While there have been shown, described and pointed out fundamental novel features of the present principles, it will be understood that various omissions, substitutions and changes in the form and details of the methods described and devices illustrated, and in their operation, may be made by those skilled in the art without departing from the spirit of the same. For example, it is expressly intended that all combinations of those elements and/or method steps which perform substantially the same function in substantially the same way to achieve the same results are within the scope of the present principles. Moreover, it should be recognized that structures and/or elements and/or method steps shown and/or described in connection with any disclosed form or implementation of the present principles may be incorporated in any other disclosed, described or suggested form or implementation as a general matter of design choice. It is the intention, therefore, to be limited only as indicated by the scope of the claims appended hereto.

It should also be understood that the example embodiments disclosed and taught herein are susceptible to numerous and various modifications and alternative forms. Thus, the use of a singular term, such as, but not limited to, "a" and the like, is not intended as limiting of the number of items. Furthermore, the naming conventions for the various components, functions, parameters, thresholds, and other elements used herein are provided as examples, and can be given a different name or label. The use of the term "or" is not limited to exclusive "or" but can also mean "and/or".

## Claims

1. A food serving system comprising:
a board having a predetermined geometric shape having an edge around the same, the edge having at least one indentation; and
a cover having the same predetermined geometric shape as the board, and at least one dual stage locking handle configured to lock the board in both a first position when covered by the cover, and a second position when the board is nested within the cover turned upside down.

2. The food serving system of claim 1, wherein the board further comprises at least two indentations positioned opposite each other and the cover further comprises at least two dual stage locking handles, each positioned and configured to engage one of the at least two indentations in the board.

3. The food serving system of claim 1, wherein the at least one dual stage locking handle is pivotally connected to the cover and comprises a lower end (3020) having a transverse extension extending there from and a snapping nub spaced from the transverse extension.

4. The food serving system of claim 3, wherein the board further comprises at least one indentation causing the board to have a thickness substantially equal to a space defined between the transverse extension and the snapping nub such that when the cover is positioned over the board to cover the board in the first position, the at least one dual stage locking handle is pivoted downward such that transverse extension and snapping nub snap over the edge of the board in an area of the at least one indentation and lock the cover to the board in the first position.

5. The food serving system of claim 1, wherein the at least one dual stage locking handle is pivotally connected to the cover and comprises:
a pivot connection point having an inner surface;
a transverse extension extending from the inner surface; and
a snapping nub spaced from the transverse extension;
wherein when in the second nested position, the edge of the board in the area of the at least one indentation fits between the transverse extension and the snapping nub thereby securing the board in the second nested position within the upside down cover.

6. The food serving system of claim 1, wherein the board further comprises a plurality of compartments for receiving food items for serving.

7. The food serving system of claim 1, wherein the at least one dual stage locking handle is pivotally connected to the cover.

8. A food serving system comprising:
a board having a predetermined geometric shape having an edge of a predetermined thickness around the same; and
a cover having the same predetermined geometric shape as the board, and at least one dual stage locking handle configured to engage the edge and lock the board in both a first position when covered by the cover, and a second position when the board is nested within the cover turned upside down.

9. The food serving system of claim 8, wherein the at least one dual stage locking handle is pivotally connected to the cover and comprises a lower end having a transverse extension extending there from and a snapping nub spaced from the transverse extension.

10. The food serving system of claim 9, wherein the predetermined thickness of the board is substantially equal to a space defined between the transverse extension and the snapping nub such that when the cover is positioned over the board to cover the board in the first position, the at least one dual stage locking handle is pivoted downward such that transverse extension and snapping nub snap over the edge of the board and lock the cover to the board in the first position.

11. The food serving system of claim 8, wherein the at least one dual stage locking handle is pivotally connected to the cover and comprises:
a pivot connection point having an inner surface;
a transverse extension extending from the inner surface; and
a snapping nub spaced from the transverse extension;
wherein when in the second nested position, the edge of the board fits between the transverse extension and the snapping nub thereby securing the board in the second nested position within the upside down cover.

12. The food serving system of claim 8, wherein the board further comprises a plurality of compartments for receiving food items for serving.

13. The food serving system of claim 8, wherein the at least one dual stage locking handle is pivotally connected to the cover.
